# EUROPÄISCHE PATENTSCHRIFT

(11) **EP 3 338 038 B1**
(45) Veröffentlichungstag und Bekanntmachung des Hinweises auf die Patenterteilung: **09.10.2024**
(21) Anmeldenummer: 16751300.1
(22) Anmeldetag: 15.08.2016
(51) Int. Cl.: F25B 49/02, F25B 31/02, H02P 6/18, H02P 21/18

(54) **HAUSHALTSKÄLTEGERÄT MIT EINEM KÄLTEMITTELKREISLAUF UND VERFAHREN ZUM BETREIBEN EINES HAUSHALTSKÄLTEGERÄTS MIT EINEM KÄLTEMITTELKREISLAUF**
DOMESTIC REFRIGERATION APPLIANCE WITH A COOLANT CIRCUIT, AND METHOD FOR OPERATING A DOMESTIC REFRIGERATION APPLIANCE WITH A COOLANT CIRCUIT
APPAREIL DE FROID MÉNAGER AVEC UN CIRCUIT D'AGENT RÉFRIGÉRANT ET PROCÉDÉ DE FONCTIONNEMENT D'UN APPAREIL DE FROID MÉNAGER AVEC UN CIRCUIT D'AGENT RÉFRIGÉRANT

(30) Priorität: 21.08.2015 DE 102015215972
(43) Veröffentlichungstag der Anmeldung: 27.06.2018
(73) Patentinhaber: BSH Hausgeräte GmbH, 81739 München (DE)
(72) Erfinder: PAULDURO, Achim, 89129 Albeck (DE); BECKMANN, Tommy, 89073 Ulm (DE); SPIEGEL, Christoph, 87439 Kempten (DE); KLEIN, Moritz, 89537 Giengen (DE)
(86) Internationale Anmeldenummer: PCT/EP2016/069344
(87) Internationale Veröffentlichungsnummer: WO 2017/032630

(56) Entgegenhaltungen:
- EP-A2- 0 784 378
- EP-A2- 1 277 959
- EP-A2- 1 473 823
- DE-A1- 10 206 191
- JP-A- 2014 079 041

## Beschreibung

Die Erfindung betrifft ein Haushaltskältegerät mit einem Kältemittelkreislauf und ein Verfahren zum Betreiben eines Haushaltskältegeräts mit einem Kältemittelkreislauf.

Haushaltskältegeräte umfassen einen kühlbaren Innenraum zum Lagern von Lebensmitteln und einen Kältemittelkreislauf zum Kühlen des kühlbaren Innenraums. Der Kältemittelkreislauf umfasst einen Verdichter, einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

Die EP 2 669 519 A1 offenbart einen Hubkolben-Verdichters und eine elektronische Steuervorrichtung, welche den Hubkolben-Verdichter derart ansteuert, dass beim Abschalten des Hubkolben-Verdichters dessen Elektromotor beim Unterschreiten einer vorbestimmten Geschwindigkeit ein Bremsmoment erzeugt.

Die DE 10 2012 006 492 A1 offenbart eine sensorlose Rotorpositionsbestimmung eines elektrischen Motors, der mit einer sich zyklisch widerholenden Last, beispielsweise mit einem Verdichter, verbunden ist.

Die EP 1 277 959 A2 offenbart ein Haushaltskältegerät mit einem Verdichter, der eine Verdichtereinheit und einen Drehstrommotor umfasst. Der Drehstrommotor ist Teil eines elektrischen Antriebs, welcher die Position des Rotors des Drehstrommotors aufgrund der Motorspannungen und -ströme abschätzt.

Aufgabe der Erfindung ist es, ein Verfahren zum Betreiben eines Haushaltskältegeräts mit einem Kältemittelkreislauf anzugeben, dessen Verdichter verbessert betrieben wird. Eine weitere Aufgabe der Erfindung ist es, ein entsprechend ausgeführtes Haushaltskältegerät anzugeben.

Die Aufgabe der Erfindung wird gelöst durch ein Verfahren zum Betreiben eines Haushaltskältegeräts, das einen wärmeisolierten Korpus mit einem kühlbaren Innenbehälter, der einen zum Lagern von Lebensmitteln vorgesehenen kühlbaren Innenraum begrenzt, einen zum Kühlen des kühlbaren Innenraums vorgesehenen Kältemittelkreislauf mit einem Kühlmittel und mit einem Verdichter, und einen elektrischen Antrieb aufweist, wobei der elektrische Antrieb einen Drehstromsynchronmotor und ein insbesondere als Umrichter ausgebildetes Stellglied zum Ansteuern des Drehstromsynchronmotors und der Verdichter eine Verdichterkammer mit einem Einlass und mit einem Auslass, einen innerhalb der Verdichterkammer verschieblich gelagerten Kolben, eine Kurbelwelle, und den Drehstromsynchronmotor des geregelten elektrischen Antriebs aufweist, wobei der geregelte elektrische Antrieb (40) eine Messvorrichtung (42) aufweist, mittels derer elektrische Strangströme (*i_{1,2,3}*) des Drehstromsynchronmotors (36) gemessen werden und eine Ist-Drehzahl des Drehstromsynchronmotors (36) ermittelt wird, indem die Messvorrichtung (42) die ermittelte Ist-Drehzahl und die gemessenen elektrischen Strangströme (*i_{1,2,3}*) des Drehstromsynchronmotors (36) aufbereitet, sodass die ermittelte Ist-Drehzahl und die gemessenen elektrischen Strangströme (*i_{1,2,3}*) des Drehstromsynchronmotors (36) von einer Regelung des elektrischen Antriebs (40) in geeigneter Form verarbeitet werden, wobei der Drehstromsynchronmotor eine Polpaarzahl P größer als 1, einen Stator und einen bezüglich des Stators drehbar gelagerten, über die Kurbelwelle mit dem Kolben gekoppelten Rotor umfasst, sodass im Betrieb des Verdichters der Kolben mittels des Drehstromsynchronmotors ein von der Verdichterkammer und dem Kolben eingeschlossenes Volumen zum Verdichten des Kühlmittels zu verkleinern vermag, aufweisend folgende Verfahrensschritte zum Ermitteln der Position des Kolbens relativ zur Verdichterkammer während des bestimmungsgemäßen Betriebs des Verdichters:
- für zumindest eine volle Umdrehung des Rotors relativ zum Stator, Ermitteln des größten Betrags zumindest eines Augenblickswertes, vorzugsweise des Augenblickwertes zumindest einer der elektrischen Strangströme des Drehstromsynchronmotors,
- Ermitteln der dem ermittelten zumindest einen Augenblickwert zugeordneten Winkelstellung des Rotors relativ zum Stator, wobei dazu der Drehstromsynchronmotor (36) ein von der Position des Kolbens (34) abhängiges Drehmoment (M) erzeugt, welches nahe am oder am oberen Totpunkt maximal wird, und zumindest einer der Strangströme (*i_{1,2,3}*), deren Stromstärken von dem Drehmoment (M) abhängig sind, ausgewertet wird, um den oberen Totpunkt zu erkennen, und
- aufgrund der Drehzahl des Drehstromsynchronmotors und der dem ermittelten Augenblickwert zugeordneten Winkelstellung des Rotors, Ermitteln der Position des Kolbens relativ zur Verdichterkammer.

Die Aufgabe der Erfindung wird auch gelöst durch ein Haushaltskältegeräts, aufweisend einen wärmeisolierten Korpus mit einem kühlbaren Innenbehälter, der einen zum Lagern von Lebensmitteln vorgesehenen kühlbaren Innenraum begrenzt, einen zum Kühlen des kühlbaren Innenraums vorgesehenen Kältemittelkreislauf mit einem Kühlmittel und mit einem Verdichter, eine elektronische Steuervorrichtung und einen geregelten elektrischen Antrieb, der einen Drehstromsynchronmotor und ein insbesondere als Umrichter ausgebildetes Stellglied zum Ansteuern des Drehstromsynchronmotors aufweist, wobei der geregelte elektrische Antrieb (40) eine Messvorrichtung (42) aufweist, mittels derer elektrische Strangströme (*i_{1,2,3}*) des Drehstromsynchronmotors (36) messbar sind und eine Ist-Drehzahl des Drehstromsynchronmotors (36) ermittelbar ist, indem die Messvorrichtung (42) die ermittelte Ist-Drehzahl und die gemessenen elektrischen Strangströme (*i_{1,2,3}*) des Drehstromsynchronmotors (36) aufbereitet, sodass die ermittelte Ist-Drehzahl und die gemessenen elektrischen Strangströme (*i_{1,2,3}*) des Drehstromsynchronmotors (36) von einer Regelung des elektrischen Antriebs (40) in geeigneter Form verarbeitet werden, wobei der Verdichter eine Verdichterkammer mit einem Einlass und mit einem Auslass, einen innerhalb der Verdichterkammer verschieblich gelagerten Kolben, eine Kurbelwelle, und den Drehstromsynchronmotor aufweist, wobei der Drehstromsynchronmotor eine Polpaarzahl P größer als 1, einen Stator und einen bezüglich des Stators drehbar gelagerten, über die Kurbelwelle mit dem Kolben gekoppelten Rotor umfasst, sodass im Betrieb des
Verdichters der Kolben mittels des Drehstromsynchronmotors ein von der Verdichterkammer und dem Kolben eingeschlossenes Volumen zum Verdichten des Kühlmittels zu verkleinern vermag, und die elektronische Steuervorrichtung eingerichtet ist, den elektrischen Antrieb gemäß dem erfindungsgemäßen Verfahren anzusteuern.

Das erfindungsgemäße Haushaltskältegerät umfasst den wärmeisolierten Korpus mit dem Innenbehälter, der den kühlbaren Innenraum begrenzt. Der kühlbare Innenraum ist zum Lagern von Lebensmitteln vorgesehen und wird mittels des Kältemittelkreislaufs gekühlt.

Der kühlbare Innenraum kann vorzugsweise mittels eines Türblatts verschlossen werden. Das Türblatt ist vorzugsweise bezüglich einer Achse, die vorzugsweise vertikal verläuft, schwenkbar gelagert. Im geöffneten Zustand ist der kühlbare Innenraum zugänglich.

Der Kältemittelkreislauf als solcher ist dem Fachmann im Prinzip bekannt und umfasst den Verdichter und insbesondere einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

Der Verdichter umfasst das von der Verdichterkammer und dem Kolben eingeschlossene Volumen, welches im Betrieb des Verdichters durch die Bewegung des Kolbens verkleinert wird, um das Kühlmittel zu verdichten.

Der Kolben ist verschieblich innerhalb der Verdichterkammer gelagert und wird über den Kolben mittels des Drehstromsynchronmotors angetrieben. Ein solcher Verdichter wird üblicherweise als Hubkolben-Verdichter bezeichnet.

Der Drehstromsynchronmotor ist insbesondere ein permanenterregter Drehstromsynchronmotor, vorzugsweise ein bürstenloser Gleichstrommotor. Der Drehstromsynchronmotor umfasst eine Polpaarzahl P von größer als 1, vorzugsweise von mindestens 3.

Im Betrieb des Verdichters wird der Drehstromsynchronmotor insbesondere mit einer von der elektronischen Steuervorrichtung oder einer Temperaturregelung ermittelten bzw. vorgegebenen Drehzahl betrieben. Daher ist der Drehstromsynchronmotor Teil des elektrischen Antriebs, welcher vorzugsweise als ein drehzahlgeregelter elektrischer Antrieb ausgeführt ist. Für ein verbessertes Regelverhalten umfasst der drehzahlgeregelte elektrische Antrieb vorzugsweise eine feldorientierte Regelung.

Eine feldorientierte Regelung bildet üblicherweise eine Kaskadenstruktur mit innenliegenden Stromregelkreisen, denen ein äußerer Drehzahlregelkreis überlagert ist.

Hubkolben-Verdichter weisen eine charakteristische Drehmomentkurve auf. Diese kann in Abhängigkeit vom Lastpunkt, aber auch von der Drehzahl des Drehstromsynchronmotors abhängen. Auch mechanische Gegebenheiten des Verdichters, wie z.B. ein Trägheitsmoment rotierenden Bestandteile des Verdichters können, eine Auswirkung auf den Betrieb des Drehstromsynchronmotors haben.

Während einer Kühlung des kühlbaren Innenraums wird der Kältemittelkreislauf und somit der elektrische Antrieb bzw. der Drehstromsynchronmotor betrieben. Dadurch dreht sich der Rotor relativ zum Stator, wodurch der Kolben innerhalb der Verdichterkammer hin und her bewegt wird. Dadurch ändert sich die Position des Kolbens relativ zur Verdichterkammer.

In einer bestimmten Position des Kolbens relativ zur Verdichterkammer ist das Volumen minimal. Diese bestimmte Position wird üblicherweise als oberer Totpunkt bezeichnet.

In einer weiteren bestimmten Position des Kolbens relativ zur Verdichterkammer ist das Volumen maximal. Diese weitere bestimmte Position wird üblicherweise als unterer Totpunkt bezeichnet.

Bewegt der Drehstromsynchronmotor den Kolben von seiner bestimmten Position, d.h. von seinem oberen Totpunkt, in seine weitere bestimmte Position, d.h. in seinen unteren Totpunkt, so erhöht sich das Volumen und der Verdichter saugt Kühlmittel durch seinen Einlass ein.

Bewegt der Drehstromsynchronmotor den Kolben von seiner weiteren bestimmten Position, d.h. von seinem unteren Totpunkt, in seine bestimmte Position, d.h. in seinen oberen Totpunkt, so verringert sich das Volumen und der Verdichter verdichtet das in der Verdichterkammer befindliche Kühlmittel, bis sich der Auslass am oberen Totpunkt öffnet, damit das verdichtete Kühlmittel zum Verflüssiger gelangen kann.

Während einer komplettem Bewegung des Kolbens, d.h. einer Bewegung des Kolbens derart, dass dieser alle möglichen Positionen relativ zur Verdichterkammer einnimmt, vollzieht der Drehstromsynchronmotor ein komplette Drehung, d.h. der Rotor dreht sich um 360° relativ zum Stator.

Während der kompletten Drehung des Drehstromsynchronmotors erzeugt dieser ein von der Position des Kolbens abhängiges Drehmoment *M*. Das Drehmoment *M* verläuft im Wesentlichen periodisch und ist maximal, wenn sich der Kolben an seiner bestimmten Position, d.h. am oberen Totpunkt, zumindest jedoch nahe an der bestimmten Position befindet und sinkt, nachdem sich der Auslass geöffnet hat.

Die zum Betrieb des Drehstromsynchronmotors vorgesehenen elektrischen Ströme sind die Strangströme, deren Stromstärken von dem Drehmoment *M* abhängen. Somit ist es möglich, aufgrund einer Auswertung der Strangströme, zumindest jedoch einer der Strangströme, zumindest für eine volle Umdrehung des Rotors relativ zum Stator den oberen Totpunkt zu erkennen, um daraufhin die entsprechende Winkelstellung des Rotors relativ zum Stator zu bestimmen.

Erfindungsgemäß wird der größte Betrag des Augenblickswertes zumindest einer der elektrischen Strangströme ermittelt.

Beispielsweise um einen Rechenaufwand beim Ermitteln der Winkelstellung zu reduzieren, kann das erfindungsgemäße Verfahren folgende Verfahrensschritte aufweisen:
- Unterteilen eines einer kompletten Umdrehung des Rotors zugeordneten Gesamtwinkelbereichs in P nacheinander folgende, gleichgroße Winkelsektoren,
- für zumindest eine volle Umdrehung des Rotors relativ zum Stator, Ermitteln des größten Betrags des Augenblickwertes zumindest einer der elektrischen Strangströme des Drehstromsynchronmotors,
- Ermitteln desjenigen Winkelsektors, dem der ermittelten Augenblickswert zugeordnet ist, und
- Verwenden des ermittelten Winkelsektors für das Ermitteln der dem ermittelten Augenblickswert zugeordneten Winkelstellung des Rotors relativ zum Stator.

Vorzugsweise wird für das Ermitteln des Winkelsektors genau einer der Strangströme des Drehstromsynchronmotors verwendet, um insbesondere den Rechenaufwand zum Ermitteln der Winkelstellung zu reduzieren.

Die Kurve des verwendeten Strangstroms bzw. die Kurven der verwendeten Strangströme können anhand der Polpaarzahl des Drehstromsynchronmotors für eine komplette mechanische Umdrehung des Rotors, d.h. für eine Umdrehung um 360° in P1 bis Px Winkelsektoren aufgeteilt werden. "x" ist dabei die Polpaarzahl P. Mittels der eben genannten Verfahrensschritte kann somit derjenige Winkelsektor ermittelt werden, dem der obere Totpunkt zugeordnet ist.

Es kann z.B. vorgesehen sein, dass der Winkel, der die Grenze des ermittelten Winkelsektors zu dessen vorhergehenden Winkelsektor bildet, als die dem ermittelten Augenblickswert zugeordnete Winkelstellung des Rotors relativ zum Stator verwendet wird.

Hat der Kolben eine definierte Position zum Rotor, sind die Winkelsektoren relativ zur Winkelstellung des Rotors bekannt und ist der Versatzwinkel zwischen dem der besagten Grenze zugeordneten Winkel und der Winkelstellung des Rotors für die bestimmte Position, d.h. für den oberen Totpunkt, bekannt, dann kann die gesuchte Winkelstellung genauer mittels der Drehzahl des Drehstromsynchronmotors und einer Zeitmessung berechnet werden.

Ist dies nicht der Fall, dann kann für ein genaueres Ermitteln der Winkelstellung Folgendes durchgeführt werden:
- nur für den ermittelten Winkelsektor, Ermitteln der größten Beträge der Augenblickwerte für zumindest zwei der elektrischen Strangströme des Drehstromsynchronmotors, und
- aufgrund der ermittelten Augenblickswerte, Ermitteln der der Position des Kolbens zugeordneten Winkelstellung des Rotors relativ zum Stator.

Für eine solchen genauere Erkennung der Rotorposition kann also basierend auf der bekannten Drehzahl und z.B. der Amplitudendifferenzen der Strangströme eine Feinerkennung durchgeführt werden und zwar ohne einen zusätzlichen Sensor.

Gemäß einer Ausführungsform des erfindungsgemäßen Verfahrens, bei dem der elektrische Antrieb ein drehzahlgeregelter elektrischer Antrieb mit einer feldorientierten Regelung ist, kann Folgendes durchgeführt werden: Erhöhen der durch die feldorientierte Regelung vorgegebenen Soll-Stromstärke für den Drehstromsynchronmotor um einen vorgegebenen Wert außer für denjenigen Winkelsektor, dem der ermittelte Augenblickswert zugeordnet ist. Damit kann eine Schwankung der Stromstärke der Strangströme verringert werden, wodurch es ermöglicht wird, dass die Drehzahl während einer kompletten Umdrehung des Rotors geringer schwankt. Somit kann die Laufruhe des Verdichters erhöht werden. Dies bietet sich vor allem bei relativ geringen Drehzahlen an und kann zu verbesserten Verdichterlaufeigenschaften führen.

Um ein Stoppen des laufenden Verdichters zu verbessern, kann ein Ansteuern des Drehstromsynchronmotors derart vorgesehen sein, dass dieser innerhalb weniger als einer 3/4 Umdrehung des Drehstromsynchronmotors, vorzugsweise wenigstens in etwa eine halben Umdrehung des Drehstromsynchronmotors bis zum Stillstand abbremst, beginnend von einer Position des Kolbens relativ zur Verdichterkammer, die der der dem ermittelten Augenblickwert zugeordneten Winkelstellung des Rotors relativ zum Stator zugeordnet ist.

Vor dem Abbremsen des Drehstromsynchronmotors wird vorzugsweise die Drehzahl des Drehstromsynchronmotors beispielsweise rampenförmig auf eine Minimaldrehzahl verringert.

Somit ergibt sich ein positionsabhängiger Stopp, welcher dann beginnt, wenn der Kolben den oberen Totpunkt einnimmt. Dadurch können Stoppgeräusche verringert werden. Optional kann zusätzlich der Kolben eine Folgepositionierung nach dem Stopp einnehmen, um z.B. Ventilundichtigkeiten zu verhindern.

Ein Ausführungsbeispiel der Erfindung ist exemplarisch in den beigefügten schematischen Zeichnungen dargestellt. Es zeigen:
- Fig. 1: ein Haushaltskältegerät in einer perspektivischen Darstellung,
- Fig. 2: einen, einen Verdichter aufweisenden Kältemittelkreislauf des Haushaltskältegerätes,
- Fig. 3: den Verdichter,
- Fig. 4: einen feldorientiert geregelten elektrischen Antrieb des Haushaltskältegerätes,
- Fig. 5: Motorströme eines Drehstromsynchronmotors des Verdichters und das vom Drehstromsynchronmotor aufgebrachte Drehmoment, und
- Fig. 6: ein Flussdiagram zum Veranschaulichen des Betriebs des Haushaltskältegerätes.

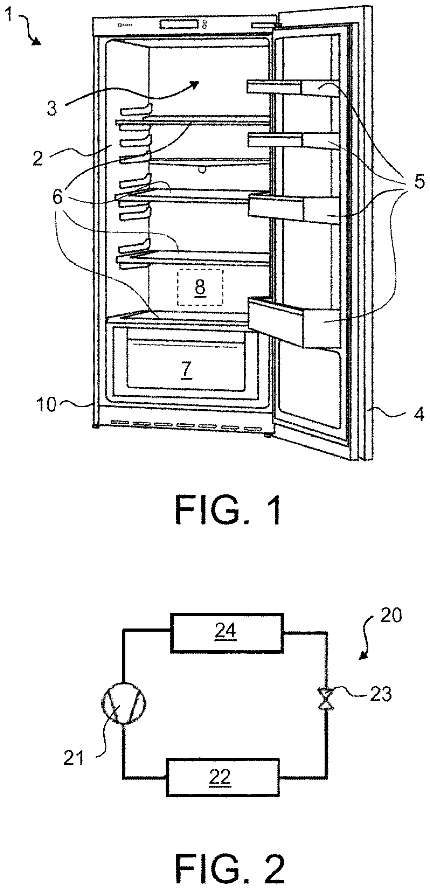

Die Fig. 1 zeigt in einer perspektivischen Darstellung ein Haushaltskältegerät 1, das einen wärmeisolierten Korpus 10 mit einem Innenbehälter 2 umfasst, der einen kühlbaren Innenraum 3 begrenzt. Der kühlbare Innenraum 3 ist zum Lagern von nicht näher dargestellten Lebensmitteln vorgesehen.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

Das Haushaltskühlgerät 1 umfasst einen in der Fig. 2 gezeigten Kältemittelkreislauf 20 zum Kühlen des kühlbaren Innenraums 3. Im Falle des vorliegenden Ausführungsbeispiels umfasst der Kältemittelkreislauf 20 ein nicht näher dargestelltes, dem Fachmann im Prinzip jedoch bekanntes Kühlmittel, einen Verdichter 21, einen dem Verdichter 21 nachgeschalteten Verflüssiger 22, eine dem Verflüssiger 22 nachgeschaltete Drosselvorrichtung 23, die insbesondere als ein Drossel- oder Kapillarrohr ausgeführt ist, und einen Verdampfer 24, der zwischen der Drosselvorrichtung 23 und dem Verdichter 21 angeordnet ist. Der Verdichter 21 ist vorzugsweise innerhalb eines Maschineraums des Haushaltkältegerätes 1 angeordnet, der sich insbesondere hinter der Schublade 7 befindet.

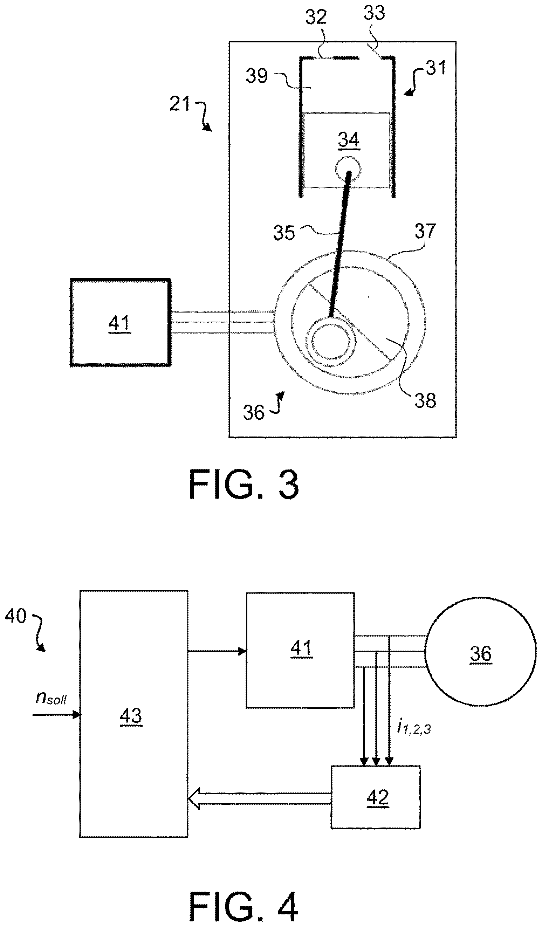

Der Verdichter 21 ist als ein Hubkolbenverdichter ausgeführt und in der Fig. 3 näher dargestellt.

Der Verdichter 21 umfasst eine Verdichterkammer 31 mit einem Einlass 32 und mit einem Auslass 33 für das Kältemittel, und einen innerhalb der Verdichterkammer 31 verschieblich gelagerten Kolben 34. Der Einlass 33 und der Auslass 33 sind jeweils mit entsprechenden Ventilen versehen, wie dies dem Fachmann im Prinzip bekannt ist.

Der Verdichter 21 umfasst eine Kurbelwelle 35 und einen Drehstromsynchronmotor 36.

Der Drehstromsynchronmotor 36 ist insbesondere ein permanenterregter Drehstromsynchronmotor, vorzugsweise ein bürstenloser Gleichstrommotor, und umfasst einen Stator 37 und einen relativ zum Stator 37 drehbar gelagerten Rotor 38. Eines der Enden der Kurbelwelle 35 ist mit dem Kolben 34 und das andere Ende der Kurbelwelle 35 ist mit dem Rotor 38 des Drehstromsynchronmotors 36 gekoppelt, sodass im bestimmungsgemäßen Betrieb des Haushalskältegerätes 1 bzw. des Verdichters 21 der Kolben 34 mittels des Drehstromsynchronmotors 36 ein von der Verdichterkammer 31 und dem Kolben 34 eingeschlossenes Volumen 39 zum Verdichten des Kühlmittels zu verkleinern vermag.

Das Haushaltskältegerät 1 umfasst im Falle des vorliegenden Ausführungsbeispiels eine elektronische Steuervorrichtung 8, die eingerichtet ist, den Kältemittelkreislauf 20, insbesondere den Verdichter 21 des Kältemittelkreislaufs 20 derart anzusteuern, dass der kühlbare Innenraum 3 zumindest in etwa eine vorgegebene oder vorgebbare Soll-Temperatur aufweist. Die elektronische Steuervorrichtung 8 ist vorzugsweise derart eingerichtet, dass sie die Temperatur des kühlbaren Innenraums 3 regelt. Um gegebenenfalls die Ist-Temperatur des kühlbaren Innenraums 3 zu erhalten, kann das Haushaltskältegerät 1 wenigstens einen nicht näher dargestellten und mit der elektronischen Steuervorrichtung 8 verbundenen Temperatursensor aufweisen.

Um den Kältemittelkreislauf 20 anzusteuern bzw. zu regeln, umfasst das Haushaltskältegerät 1 im Falle des vorliegenden Ausführungsbeispiels einen in der Fig. 4 gezeigten geregelten elektrischen Antrieb 40, welcher den Drehstromsynchronmotor 36 des Verdichters 21 aufweist. Bei Bedarf wird der Drehstromsynchronmotor 36 entsprechend einer von der elektronischen Steuervorrichtung 8 vorgegebenen Soll-Drehzahl *nₛₒₗₗ* angetrieben. Die Soll-Drehzahl *nₛₒₗₗ* wird insbesondere von der elektronischen Steuervorrichtung 8 aufgrund einer beabsichtigten Kühlung des kühlbaren Innenraums 3 berechnet bzw. vorgegeben, beispielsweise aufgrund der aktuellen Temperatur und der Soll-Temperatur des kühlbaren Innenraums 3.

Der elektrische Antrieb 40 umfasst ein Stellglied zum Antreiben des Drehstromsynchronmotors 36. Das Stellglied ist als Umrichter 41 ausgeführt und erzeugt im Betrieb des elektrischen Antriebs 40 eine dreiphasige Spannung, deren Grundschwingung eine Amplitude und eine Grundfrequenz *f* aufweist, die indirekt abhängig von der Soll-Drehzahl *nₛₒₗₗ* und einer Ist-Drehzahl des Drehstromsynchronmotors 36 ist.

Der Drehstromsynchronmotor 36 weist eine Polpaarzahl P größer als 1 auf, sodass die Ist-Drehzahl *n* gleich *f*/P ist.

Im Falle des vorliegenden Ausführungsbeispiels ist die Polpaarzahl P gleich 3.

Im Falle des vorliegenden Ausführungsbeispiels weist der geregelte elektrische Antrieb 40 eine Messvorrichtung 42 auf, mittels derer die elektrischen Strangströme *i_{1,2,3}* des Drehstromsynchronmotors 36 gemessen werden und die Ist-Drehzahl des Drehstromsynchronmotors 36 ermittelt wird. Die Messvorrichtung 42 bereitet gegebenenfalls die ermittelte Ist-Drehzahl und die gemessenen elektrischen Strangströme *i_{1,2,3}* des Drehstromsynchronmotors 36 auf, sodass die ermittelte Ist-Drehzahl und die gemessenen elektrischen Strangströme *i_{1,2,3}* des Drehstromsynchronmotors 36 von einer Regelung des elektrischen Antriebs 40 in geeigneter Form verarbeitet werden können. Die Ist-Drehzahl kann z.B., wie es beim vorliegenden Ausführungsbeispiels vorgesehen ist, aus den gemessenen Strangströme *i_{1,2,3}* ermittelt werden. Die Ist-Drehzahl kann aber auch direkt mittels eines entsprechenden Sensors gemessen werden.

Im Falle des vorliegenden Ausführungsbeispiels basiert die Regelung des geregelten elektrischen Antriebs 40 auf der feldorientierten Regelung 43. Die feldorientierte Regelung 43 bildet eine Kaskadenstruktur mit innenliegenden Stromregelkreisen, denen ein äußerer Drehzahlregelkreis überlagert ist.

Während einer Kühlung des kühlbaren Innenraums 3 wird der Kältemittelkreislauf 20 und somit der elektrische Antrieb 40 bzw. der Drehstromsynchronmotor 36 betrieben. Dadurch dreht sich der Rotor 38 relativ zum Stator 37, wodurch der Kolben 34 innerhalb der Verdichterkammer 39 hin und her bewegt wird. Dadurch ändert sich die Position des Kolbens 34 relativ zur Verdichterkammer 39.

In einer bestimmten Position des Kolbens 34 relativ zur Verdichterkammer 39 ist das Volumen 39 minimal. Diese bestimmte Position wird üblicherweise als oberer Totpunkt bezeichnet.

In einer weiteren bestimmten Position des Kolbens 34 relativ zur Verdichterkammer 39 ist das Volumen 39 maximal. Diese weitere bestimmte Position wird üblicherweise als unterer Totpunkt bezeichnet.

Bewegt der Drehstromsynchronmotor 36 den Kolben 34 von seiner bestimmten Position, d.h. von seinem oberen Totpunkt, in seine weitere bestimmte Position, d.h. in seinen unteren Totpunkt, so erhöht sich das Volumen 39 und der Verdichter 21 saugt Kühlmittel durch seinen Einlass 32 ein.

Bewegt der Drehstromsynchronmotor 36 den Kolben 43 von seiner weiteren bestimmten Position, d.h. von seinem unteren Totpunkt, in seine bestimmte Position, d.h. in seinen oberen Totpunkt, so verringert sich das Volumen 39 und der Verdichter 21 verdichtet das in der Verdichterkammer 31 befindliche Kühlmittel, bis sich der Auslass 33 am oberben Totpunkt öffnet, damit das verdichtete Kühlmittel zum Verflüssiger 22 gelangen kann.

Während einer komplettem Bewegung des Kolbens 34, d.h. einer Bewegung des Kolbens 34 derart, dass dieser alle möglichen Positionen relativ zur Verdichterkammer 31 einnimmt, vollzieht der Drehstromsynchronmotor 36 ein komplette Drehung, d.h. der Rotor 38 dreht sich um 360° relativ zum Stator 37.

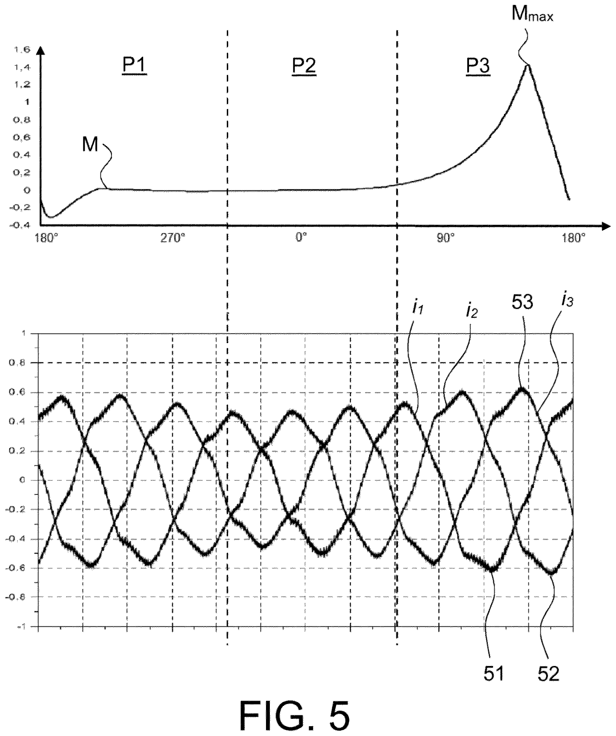

Während der kompletten Drehung des Drehstromsynchronmotors 36 erzeugt dieser ein von der Position des Kolbens 34 abhängiges Drehmoment *M*, welches in der Fig. 5 grafisch dargestellt ist. Das Drehmoment *M* verläuft im Wesentlichen periodisch und ist maximal (maximales Drehmoment *Mₘₐₓ*), wenn sich der Kolben 43 an seiner bestimmten Position, d.h. am oberen Totpunkt, zumindest jedoch nahe an der bestimmten Position befindet und sinkt, nachdem sich der Auslass 33 geöffnet hat.

Für eine komplette Umdrehung des Drehstromsynchronmotors 36 verlaufen die elektrischen Strangströme *i_{1,2,3}* periodisch. Zumindest annähernd entsprechend dem aufzubringenden Drehmoment M des Drehstromsynchronmotors 36 verlaufen die elektrischen Strangströme *i_{1,2,3}* des Drehstromsynchronmotors 36. Diese sind ebenfalls in der Fig. 5 dargestellt.

Im Falle des vorliegenden Ausführungsbeispiels ist die elektronische Steuervorrichtung 8 derart ausgeführt, dass sie das folgend beschriebene Verfahren zum Betreiben des Haushaltskältegeräts 1 durchführt, um während des bestimmungsgemäßen Betriebs des Verdichters 21 die Position des Kolbens 34 relativ zur Verdichterkammer 31 zu ermitteln:
Insbesondere während der ersten Umdrehungen des Drehstromsynchronmotors 36 nach dem Beginn einer Kühlphase für den kühlbaren Innenraum 3 ermittelt die elektronische Steuervorrichtung 8 zumindest für eine volle Umdrehung des Rotors 38 relativ zum Stator 37 den größte Betrag der Augenblickswerte 51, 52, 53 zumindest einer der elektrischen Strangströme *i_{1,2,3}* des Drehstromsynchronmotors 36. Danach ermittelt die elektronische Steuervorrichtung 8 die dem ermittelten Augenblickwert 52 zugeordneten Winkelstellung des Rotors 38 relativ zum Stator 37. Aufgrund der Drehzahl des Drehstromsynchronmotors 36 und der dem ermittelten Augenblickwert 52 zugeordneten Winkelstellung des Rotors 38 ist es der elektronischen Steuervorrichtung 8 ermöglicht, während des bestimmungsgemäßen Betriebs des Verdichters 21 die Position des Kolbens 34 relativ zur Verdichterkammer 31 zu ermitteln.

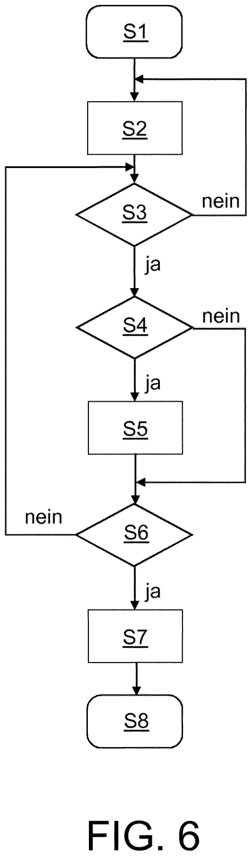

Insbesondere wird für das Ermitteln der Position des Kolbens 34 relativ zur Verdichterkammer 31 Folgendes durchgeführt. Dieses Verfahren ist in einem in der Fig. 6 gezeigten Flussdiagramm zusammengefasst.

Zunächst wird ein einer kompletten Umdrehung des Rotors 38 zugeordneter Gesamtwinkelbereich von 360° in P nacheinander folgende, gleichgroße Winkelsektoren P1, P2, P3 unterteilt. Dies kann z.B. vor oder nach einem Starten des Verdichters 21, Schritt S1 des Flussdiagramms, erfolgen.

Für das Ermitteln der Position des Kolbens 34, Schritt S2 des Flussdiagramms, wird anschließend für zumindest eine volle Umdrehung des Rotors 38 relativ zum Stator 37 der größte Betrag des Augenblickwertes 52 genau einer der elektrischen Strangströme *i₂* des Drehstromsynchronmotors 36 verwendet, um denjenigen Winkelsektors P3 zu ermitteln, in dem dieser größte Augenblickswert 52 liegt. Der ermittelte Winkelsektor P3 wird für das Ermitteln der dem ermittelten Augenblickswert 53 zugeordneten Winkelstellung des Rotors 38 relativ zum Stator 37. Solange der Position des Kolbens 34 nicht erkannt ist, Schritt S3 des Flussdiagramms, wird der Schritt S2 widerholt.

Im Falle des vorliegenden Ausführungsbeispiels wird zunächst der Winkel, der die Grenze des ermittelten Winkelsektors P3 zu dessen vorhergehenden Winkelsektor P2 bildet, als die dem ermittelten Augenblickswert zugeordnete Winkelstellung des Rotors 38 relativ zum Stator 37 verwendet.

Hat der Kolben 34 eine definierte Position zum Rotor 38, sind die Winkelsektoren P1, P2, P3 relativ zur Winkelstellung des Rotors 38 bekannt und ist der Versatzwinkel zwischen dem der besagten Grenze zugeordneten Winkel und der Winkelstellung des Rotors 38 für die bestimmte Position, d.h. für den oberen Totpunkt, bekannt, dann kann die gesuchte Winkelstellung mittels der Drehzahl des Drehstromsynchronmotors 36 und einer Zeitmessung berechnet werden.

Im Falle des vorliegenden Ausführungsbeispiels wird der Gesamtwinkelbereich willkürlich gewählt. Außerdem weist der Kolben 34 keine definierte Position zum Rotor 38 auf.

Für das Ermitteln der Position des Kolbens 34 ermittelt im Falle des vorliegenden Ausführungsbeispiels nur für den ermittelten Winkelsektor P3 die größten Beträge der Augenblickwerte 51, 52, 53 für zumindest zwei der elektrischen Strangströme, vorzugsweise für alle drei Strangströme *i_{1,2,3}* des Drehstromsynchronmotors 36, um aufgrund der ermittelten Augenblickswerte 51, 52, 53 die der Position des Kolbens 34 zugeordnete Winkelstellung des Rotors 38 relativ zum Stator 37 genauer zu bestimmen.

Im Falle des vorliegenden Ausführungsbeispiels steigen die Werte der Beträge der Augenblickwerte 51, 52, 53 im ermittelten Winkelsektor P3 kontinuierlich an. Das bedeutet, dass die bestimmte Position, d.h. der obere Totpunkt zwischen dem letzten Augenblickswert 52 innerhalb des ermittelten Winkelsektors P3 und der Grenze zum nächsten Winkelsektor P1 liegt.

Im Falle des vorliegenden Ausführungsbeispiels kann die elektronische Steuervorrichtung 8 eingerichtet sein, die feldorientierte Regelung 43 des elektrischen Antriebs 30 zu entlasten bzw. zu verbessern. So kann es vorgesehen sein, dass z.B. die Ist-Drehzahl des Drehstromsynchronmotor 36 dahingehend ausgewertet wird, dass sie möglichst konstant ist, Schritt S3 des Flussdiagramms. Ist dies nicht der Fall, so kann eine Verbesserung der Laufruhe des Drehstromsynchronmotors 36 durchgeführt werden, Schritt S4 des Flussdiagramms.

Die Verbesserung der Laufruhe des Drehstromsynchronmotors 36 wird im Falle des vorliegenden Ausführungsbeispiels derart erreicht, dass die durch die feldorientierte Regelung 34 vorgegebene Soll-Stromstärke für den Drehstromsynchronmotor 36 um einen vorgegebenen Wert außer für denjenigen Winkelsektor P3, dem der ermittelte Augenblickswert 52 zugeordnet ist, erhöht wird.

Soll der laufende Verdichter 21 z.B. aufgrund der Temperaturregelung gestoppt werden, Schritt S6 des Flussdiagramms, dann kann ein gesteuertes Stoppen des Verdichters 21 vorgesehen sein, Schritt S7 des Flussdiagramms. Dieses kann, gesteuert durch die elektronische Steuervorrichtung 8, folgendermaßen erfolgen:
Zunächst wird die Drehzahl des Drehstromsynchronmotors 36 auf eine Minimaldrehzahl verringert. Dies erfolgt z.B. kontinuierlich, vorzugsweise rampenförmig.

Anschließend wird der Drehstromsynchronmotors 36 derart angesteuert, dass dieser innerhalb weniger als einer ¾, vorzugsweise zumindest in etwa innerhalb einer halben Umdrehung des Drehstromsynchronmotors 36 bis zum Stillstand abbremst. Dieser Vorgang beginnt bei einer Position des Kolbens 34 relativ zur Verdichterkammer 31, die der der dem ermittelten Augenblickwert 52 zugeordneten Winkelstellung des Rotors 38 relativ zum Stator 37 zugeordnet ist, also dann, wenn sich der Kolben 34 in seinem oberen Totpunkt befindet.

Danach ist der Verdichter 21 gestoppt, Schritt S8 des Flussdiagramms.

### BEZUGSZEICHENLISTE

- 1: Haushaltskältegerät
- 2: Innenbehälter
- 3: kühlbarer Innenraum
- 4: Türblatt
- 5: Türabsteller
- 6: Fachböden
- 7: Schublade
- 8: elektronische Steuervorrichtung
- 10: Korpus
- 20: Kältemittelkreislauf
- 21: Verdichter
- 22: Verflüssiger
- 23: Drosselvorrichtung
- 24: Verdampfer
- 31: Verdichterkammer
- 32: Einlass
- 33: Auslass
- 34: Kolben
- 35: Kurbelwelle
- 36: Drehstromsynchronmotor
- 37: Stator
- 38: Rotor
- 39: Volumen
- 40: elektrischer Antrieb
- 41: Umrichter
- 42: Messvorrichtung
- 43: feldorientierte Regelung
- 51,52,53: Augenblickswert
- *i_{1,2,3}*: Strangströme
- *nₛₒₗₗ*: Soll-Drehzahl
- *M*: *Drehmoment*
- *Mₘₐₓ*: maximales Drehmoment
- P: Polpaarzahl
- P1, P2, P3: Winkelsektor
- S1-S8: Schritte

## Patentansprüche

1. Verfahren zum Betreiben eines Haushaltskältegeräts (1), das einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kühlmittel und mit einem Verdichter (21), und einen geregelten elektrischen Antrieb (40) aufweist, wobei der geregelte elektrische Antrieb (40) einen Drehstromsynchronmotor (36) und ein insbesondere als Umrichter (41) ausgebildetes Stellglied zum Ansteuern des Drehstromsynchronmotors (36) und der Verdichter (21) eine Verdichterkammer (31) mit einem Einlass (32) und mit einem Auslass (33), einen innerhalb der Verdichterkammer (31) verschieblich gelagerten Kolben (34), eine Kurbelwelle (35), und den Drehstromsynchronmotor (36) des geregelten elektrischen Antriebs (40) aufweist, wobei der geregelte elektrische Antrieb (40) eine Messvorrichtung (42) aufweist, mittels derer elektrische Strangströme (*i_{1,2,3}*) des Drehstromsynchronmotors (36) gemessen werden und eine Ist-Drehzahl des Drehstromsynchronmotors (36) ermittelt wird, indem die Messvorrichtung (42) die ermittelte Ist-Drehzahl und die gemessenen elektrischen Strangströme (*i_{1,2,3}*) des Drehstromsynchronmotors (36) aufbereitet, sodass die ermittelte Ist-Drehzahl und die gemessenen elektrischen Strangströme (*i_{1,2,3}*) des Drehstromsynchronmotors (36) von einer Regelung des elektrischen Antriebs (40) in geeigneter Form verarbeitet werden, wobei der Drehstromsynchronmotor (36) eine Polpaarzahl P größer als 1, einen Stator (37) und einen bezüglich des Stators (37) drehbar gelagerten, über die Kurbelwelle (35) mit dem Kolben (34) gekoppelten Rotor (38) umfasst, sodass im Betrieb des Verdichters (21) der Kolben (34) mittels des Drehstromsynchronmotors (36) ein von der Verdichterkammer (31) und dem Kolben (34) eingeschlossenes Volumen (39) zum Verdichten des Kühlmittels zu verkleinern vermag, aufweisend folgende Verfahrensschritte zum Ermitteln der Position des Kolbens (34) relativ zur Verdichterkammer (31) während des bestimmungsgemäßen Betriebs des Verdichters (21):
- für zumindest eine volle Umdrehung des Rotors (38) relativ zum Stator (37), Ermitteln des größten Betrags zumindest eines Augenblickswertes (51, 52, 53) zumindest einer der elektrischen Strangströme (*i_{1,2,3}*) des Drehstromsynchronmotors (36),
- Ermitteln der dem ermittelten Augenblickwert (51) zugeordneten Winkelstellung des Rotors (38) relativ zum Stator (37), wobei dazu der Drehstromsynchronmotor (36) ein von der Position des Kolbens (34) abhängiges Drehmoment (M) erzeugt, welches nahe am oder am oberen Totpunkt maximal wird, und zumindest einer der Strangströme (*i_{1,2,3}*), deren Stromstärken von dem Drehmoment (M) abhängig sind, ausgewertet wird, um den oberen Totpunkt zu erkennen, und
- aufgrund der Drehzahl des Drehstromsynchronmotors (36) und der dem ermittelten Augenblickwert (51) zugeordneten Winkelstellung des Rotors (38), Ermitteln der Position des Kolbens (34) relativ zur Verdichterkammer (31).

2. Verfahren nach Anspruch 1, bei dem der elektrische Antrieb (40) ein drehzahlgeregelter elektrischer Antrieb ist, der insbesondere eine feldorientierte Regelung (43) aufweist.

3. Verfahren nach Anspruch 1 oder 2, aufweisend folgende Verfahrensschritte:
- Unterteilen eines einer kompletten Umdrehung des Rotors (38) zugeordneten Gesamtwinkelbereichs in P nacheinander folgende, gleichgroße Winkelsektoren (P1, P2, P3),
- für zumindest eine volle Umdrehung des Rotors (38) relativ zum Stator (37), Ermitteln des größten Betrags des zumindest einen Augenblickwertes (51, 52, 53) zumindest einer der elektrischen Strangströme (*i_{1,2,3}*) des Drehstromsynchronmotors (36),
- Ermitteln desjenigen Winkelsektors (P3), dem der ermittelten Augenblickswert (51) zugeordnet ist, und
- Verwenden des ermittelten Winkelsektors (P3) für das Ermitteln der dem ermittelten Augenblickswert (51) zugeordneten Winkelstellung des Rotors (38) relativ zum Stator (37).

4. Verfahren nach Anspruch 3, bei dem für das Ermitteln des Winkelsektors (P3) genau einer der Strangströme (*i₁*) des Drehstromsynchronmotors (36) verwendet wird.

5. Verfahren nach Anspruch 3 oder 4, bei dem der Winkel, der die Grenze des ermittelten Winkelsektors (P3) zu dessen vorhergehenden Winkelsektor (P2) bildet, als die dem ermittelten zumindest einen Augenblickswert zugeordneten Winkelstellung des Rotors (38) relativ zum Stator (37) verwendet wird.

6. Verfahren nach einem der Ansprüche 3 bis 5, zusätzlich aufweisend, folgende Verfahrensschritte:
- nur für den ermittelten Winkelsektor (P3), Ermitteln der größten Beträge der Augenblickwerte (51, 52, 53) für zumindest zwei der elektrischen Strangströme (*i_{1,2,3}*) des Drehstromsynchronmotors (36), und
- aufgrund der ermittelten Augenblickswerte (51, 52, 53), Ermitteln der der Position des Kolbens (34) zugeordneten Winkelstellung des Rotors (38) relativ zum Stator (37).

7. Verfahren nach einem der Ansprüche 1 bis 6, zusätzlich aufweisend Ansteuern des Drehstromsynchronmotors (36) derart, dass dieser innerhalb weniger als einer 3/4 Umdrehung des Drehstromsynchronmotors (36) bis zum Stillstand abbremst, beginnend von einer Position des Kolbens (34) relativ zur Verdichterkammer (31), die der der dem ermittelten wenigsten einen Augenblickwerts (51, 52, 53) zugeordneten Winkelstellung des Rotors (38) relativ zum Stator (37) zugeordnet ist.

8. Verfahren nach Anspruch 7, aufweisend, vor dem Abbremsen des Drehstromsynchronmotors (36), Verringern der Drehzahl des Drehstromsynchronmotors (36) auf eine Minimaldrehzahl.

9. Verfahren nach einem der Ansprüche 3 bis 8, bei dem der elektrische Antrieb (40) ein drehzahlgeregelter elektrischer Antrieb mit einer feldorientierten Regelung (43) ist, aufweisend Erhöhen der durch die feldorientierte Regelung (34) vorgegebenen Soll-Stromstärke für den Drehstromsynchronmotor (36) um einen vorgegebenen Wert außer für denjenigen Winkelsektor (P3), dem der ermittelte Augenblickswert (51) zugeordnet ist.

10. Haushaltskältegerät, aufweisend einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kühlmittel und mit einem Verdichter (21), eine elektronische Steuervorrichtung (8) und einen geregelten elektrischen Antrieb (40), der einen Drehstromsynchronmotor (36) und ein insbesondere als Umrichter (41) ausgebildetes Stellglied zum Ansteuern des Drehstromsynchronmotors (36) aufweist, wobei der geregelte elektrische Antrieb (40) eine Messvorrichtung (42) aufweist, mittels derer elektrische Strangströme (*i_{1,2,3}*) des Drehstromsynchronmotors (36) messbar sind und eine Ist-Drehzahl des Drehstromsynchronmotors (36) ermittelbar ist, indem die Messvorrichtung (42) die ermittelte Ist-Drehzahl und die gemessenen elektrischen Strangströme (*i_{1,2,3}*) des Drehstromsynchronmotors (36) aufbereitet, sodass die ermittelte Ist-Drehzahl und die gemessenen elektrischen Strangströme (*i_{1,2,3}*) des Drehstromsynchronmotors (36) von einer Regelung des elektrischen Antriebs (40) in geeigneter Form verarbeitet werden, wobei der Verdichter (21) eine Verdichterkammer (31) mit einem Einlass (32) und mit einem Auslass (33), einen innerhalb der Verdichterkammer (31) verschieblich gelagerten Kolben (34), eine Kurbelwelle (35), und den Drehstromsynchronmotor (36) aufweist, wobei der Drehstromsynchronmotor (36) eine Polpaarzahl P größer als 1, einen Stator (37) und einen bezüglich des Stators (37) drehbar gelagerten, über die Kurbelwelle (35) mit dem Kolben (34) gekoppelten Rotor (38) umfasst, sodass im Betrieb des Verdichters (21) der Kolben (34) mittels des Drehstromsynchronmotors (36) ein von der Verdichterkammer (31) und dem Kolben (34) eingeschlossenes Volumen (39) zum Verdichten des Kühlmittels zu verkleinern vermag, und die elektronische Steuervorrichtung (8) eingerichtet ist, den geregelten elektrischen Antrieb (40) gemäß dem Verfahren nach einem der Ansprüche 1 bis 9 anzusteuern.

## Claims

1. Method for operating a household refrigeration appliance (1) which has a heat-insulated carcass (10) with a coolable inner container (2), which delimits a coolable interior space (3) provided to store food, a refrigerant circuit (20) provided to cool the coolable interior space (3) with a coolant and a compressor (21), and a regulated electric drive (40), wherein the regulated electric drive (40) has a three-phase AC synchronous motor (36) and a control element, which is configured in particular as an inverter (41), for activating the three-phase AC synchronous motor (36) and the compressor (21) has a compressor chamber (31) with an inlet (32) and an outlet (33), a piston (34) mounted in a displaceable manner within the compressor chamber (31), a crankshaft (35) and the three-phase AC synchronous motor (36) of the regulated electric drive (40), wherein the regulated electric drive (40) has a measuring apparatus (42), which is used to measure electric phase currents (*i_{1,2,3}*) of the three-phase AC synchronous motor (36), and an actual speed of the three-phase AC synchronous motor (36) is determined by the measuring apparatus (42) preprocessing the determined actual speed and the measured electric phase currents (*i_{1,2,3}*) of the three-phase AC synchronous motor (36), so that the determined actual speed and the measured electric phase currents (*i_{1,2,3}*) of the three-phase AC synchronous motor (36) are processed by a regulator of the electric drive (40) in a suitable form, wherein the three-phase AC synchronous motor (36) comprises a number P of pole pairs greater than 1, a stator (37) and a rotor (38) that is coupled to the piston (34) by way of the crankshaft (35) and mounted in such a manner that it can rotate in relation to the stator (37), so that when the compressor (21) operates, the piston (34) is able to reduce a volume (39) enclosed by the compressor chamber (31) and piston (34) by means of the three-phase AC synchronous motor (36), in order to compress the coolant, having the following method steps for determining the position of the piston (34) relative to the compressor chamber (31) during operation of the compressor (21) in the intended manner:
- Determining the greatest sum of at least one instantaneous value (51, 52, 53) of at least one of the electric phase currents (*i_{1,2,3}*) of the three-phase AC synchronous motor (36), for at least one full rotation of the rotor (38) relative to the stator (37),
- Determining the angular position of the rotor (38) relative to the stator (37) assigned to the determined instantaneous value (51), wherein to this end the three-phase AC synchronous motor (36) generates a torque (M) as a function of the position of the piston (34), which is at a maximum close to or at the top dead centre, and at least one of the phase currents (*i_{1,2,3}*), the current strengths of which are a function of the torque (M), in order to identify the top dead centre, and
- Determining the position of the piston (34) relative to the compressor chamber (31) based on the speed of the three-phase AC synchronous motor (36) and the angular position of the rotor (38) assigned to the determined instantaneous value (51).

2. Method according to claim 1, wherein the electric drive (40) is a speed-regulated electric drive, which in particular has a field-oriented regulator (43).

3. Method according to claim 1 or 2, having the following method steps:
- Dividing an overall angular range assigned to a complete rotation of the rotor (38) into P consecutive angular sectors (P1, P2, P3) of equal size,
- Determining the greatest sum of the at least one instantaneous value (51, 52, 53) of at least one of the electric phase currents (*i_{1,2,3}*) of the three-phase AC synchronous motor (36) for at least one full rotation of the rotor (38) relative to the stator (37),
- Determining the angular sector (P3) to which the determined instantaneous value (51) is assigned, and
- Using the determined angular sector (P3) to determine the angular position of the rotor (38) relative to the stator (37) assigned to the determined instantaneous value (51).

4. Method according to claim 3, wherein just one of the electric phase currents *(i₁)* of the three-phase AC synchronous motor (36) is used to determine the angular sector (P3).

5. Method according to claim 3 or 4, wherein the angle, which forms the boundary between the determined angular sector (P3) and its preceding angular sector (P2) is used as the angular position of the rotor (38) relative to the stator (37) assigned to the determined at least one instantaneous value.

6. Method according to one of claims 3 to 5, additionally having the following method steps:
- Determining the greatest sums of the instantaneous values (51, 52, 53) for at least two of the electric phase currents (i1,2,3) of the three-phase AC synchronous motor (36) just for the determined angular sector (P3), and
- Determining the angular position of the rotor (38) relative to the stator (37) assigned to the position of the piston (34) based on the determined instantaneous values (51, 52, 53).

7. Method according to one of claims 1 to 6, additionally featuring activation of the three-phase AC synchronous motor (36) such that it slows to a stop within less than a ¾ rotation of the three-phase AC synchronous motor (36), starting when the piston (34) is in a position relative to the compressor chamber (31), which is assigned to the angular position of the rotor (38) relative to the stator (37) assigned to the determined at least one instantaneous value (51, 52, 53).

8. Method according to claim 7, featuring, before the three-phase AC synchronous motor (36) slows down, reduction of the speed of the three-phase AC synchronous motor (36) to a minimum speed.

9. Method according to one of claims 3 to 8, wherein the electric drive (40) is a speed-regulated electric drive with a field-oriented regulator (43), featuring increasing the target current strength predetermined by the field-oriented regulator (34) for the three-phase AC synchronous motor (36) by a predefined value apart from for the angular sector (P3) to which the determined instantaneous value (51) is assigned.

10. Household refrigeration appliance, having a heat-insulated carcass (10) with a coolable inner container (2), which delimits a coolable interior space (3) provided to store food, a refrigerant circuit (20) provided to cool the coolable interior space (3) with a coolant and a compressor (21), an electronic control apparatus (8) and a regulated electric drive (40), which has a three-phase AC synchronous motor (36) and a control element, which is configured in particular as an inverter (41), for activating the three-phase AC synchronous motor (36), wherein the regulated electric drive (40) has a measuring apparatus (42), which is used to measure electric phase currents (*i_{1,2,3}*) of the three-phase AC synchronous motor (36), and an actual speed of the three-phase AC synchronous motor (36) can be determined by the measuring apparatus (42) preprocessing the determined actual speed and the measured electric phase currents (*i_{1,2,3}*) of the three-phase AC synchronous motor (36), so that the determined actual speed and the measured electric phase currents (*i_{1,2,3}*) of the three-phase AC synchronous motor (36) are processed by a regulator of the electric drive (40) in a suitable form, wherein the compressor (21) has a compressor chamber (31) with an inlet (32) and an outlet (33), a piston (34) mounted in a displaceable manner within the compressor chamber (31), a crankshaft (35) and the three-phase AC synchronous motor (36), wherein the three-phase AC synchronous motor (36) comprises a number P of pole pairs greater than 1, a stator (37) and a rotor (38) that is coupled to the piston (34) by way of the crankshaft (35) and mounted in such a manner that it can rotate in relation to the stator (37), so that when the compressor (21) operates, the piston (34) is able to reduce a volume (39) enclosed by the compressor chamber (31) and piston (34) by means of the three-phase AC synchronous motor (36), in order to compress the coolant, and the electronic control apparatus (8) is designed to activate the regulated electric drive (40) in accordance with the method according to one of claims 1 to 9.

## Revendications

1. Procédé d'exploitation d'un appareil frigorifique ménager (1), lequel comprend un corps calorifugé (10) avec un contenant intérieur réfrigérable (2), qui délimite un espace intérieur réfrigérable (3) prévu pour le stockage de denrées alimentaires, un circuit d'agent frigorifique (20) prévu pour la réfrigération de l'espace intérieur réfrigérable (3) avec un agent réfrigérant et un compresseur (21), et un actionnement électrique régulé (40), dans lequel l'actionnement électrique régulé (40) présente un moteur synchrone à courant triphasé (36) et un actionneur formé en particulier sous la forme d'un convertisseur (41) pour la commande du moteur synchrone à courant triphasé (36) et le compresseur (21) présente une chambre de compression (31) avec une entrée (32) et avec une sortie (33), un piston (34) logé de façon mobile à l'intérieur de la chambre de compression (31), un vilebrequin (35), et le moteur synchrone à courant triphasé (36) de l'actionnement électrique régulé (40), dans lequel l'actionnement électrique régulé (40) présente un dispositif de mesure (42), au moyen duquel des courants de phase électriques (*i_{1,2,3}*) du moteur synchrone à courant triphasé (36) sont mesurés et une vitesse de rotation effective du moteur synchrone à courant triphasé (36) est déterminée, le dispositif de mesure (42) traitant la vitesse de rotation effective déterminée et les courants de phase électriques mesurés (*i_{1,2,3}*) du moteur synchrone à courant triphasé (36), de sorte que la vitesse de rotation effective déterminée et les courants de phase électriques mesurés (*i_{1,2,3}*) du moteur synchrone à courant triphasé (36) sont traités par une régulation de l'actionnement électrique (40) sous forme appropriée, dans lequel le moteur synchrone à courant triphasé (36) comprend un nombre de paires de bornes P supérieur à 1, un stator (37) et un rotor (38) logé en rotation par rapport au stator (37), couplé au piston (34) via le vilebrequin (35), de sorte que durant le fonctionnement du compresseur (21), le piston (34) est capable, au moyen du moteur synchrone à courant triphasé (36) de réduire un volume (39) inclus par la chambre de compression (31) et le piston (34) pour compresser l'agent réfrigérant, présentant les étapes de procédé suivantes pour la détermination de la position du piston (34) par rapport à la chambre de compression (31) pendant le fonctionnement conforme à sa destination du compresseur (21) :
- pour au moins une rotation complète du rotor (38) par rapport au stator (37), détermination de la valeur la plus élevée d'au moins une valeur instantanée (51, 52, 53) d'au moins un des courants de phase électriques (*i_{1,2,3}*) du moteur synchrone à courant triphasé (36),
- détermination de la position angulaire du rotor (38) par rapport au stator (37) affectée à la valeur instantanée déterminée (51), dans lequel le moteur synchrone à courant triphasé (36) génère pour ce faire un moment de couple (M) dépendant de la position du piston (34), lequel moment est maximal à proximité du ou au point mort haut, et au moins l'un des courants de phase (*i_{1,2,3}*), dont les intensités de courant dépendent du moment de couple (M), est évalué, afin de détecter le point mort haut, et
- sur la base de la vitesse de rotation du moteur synchrone à courant triphasé (36) et de la position angulaire du rotor (38) affectée à la valeur instantanée déterminée (51), détermination de la position du piston (34) par rapport à la chambre de compression (31).

2. Procédé selon la revendication 1, dans lequel l'actionnement électrique (40) est un actionnement électrique à régulation de vitesse de rotation, qui présente en particulier une régulation à orientation de champ (43).

3. Procédé selon la revendication 1 ou 2, présentant les étapes de procédé suivantes :
- subdivision d'une plage angulaire totale affectée à une rotation complète du rotor (38) en P secteurs angulaires identiques consécutifs (P1, P2, P3),
- pour au moins une rotation complète du rotor (38) par rapport au stator (37), détermination de la valeur la plus élevée de l'au moins une valeur instantanée (51, 52, 53) d'au moins un des courants de phase électriques (*i_{1,2,3}*) du moteur synchrone à courant triphasé (36),
- détermination du secteur angulaire (P3) auquel la valeur instantanée déterminée (51) est affectée, et
- utilisation du secteur angulaire déterminé (P3) pour la détermination de la position angulaire du rotor (38) par rapport au stator (37) affectée à la valeur instantanée (51) déterminée.

4. Procédé selon la revendication 3, dans lequel pour la détermination du secteur angulaire (P3) exactement un des courants de phase (*i₁*) du moteur synchrone à courant triphasé (36) est utilisé.

5. Procédé selon la revendication 3 ou 4, dans lequel l'angle constituant la limite du secteur angulaire déterminé (P3) par rapport au secteur angulaire précédent (P2) est utilisé comme position angulaire du rotor (38) par rapport au stator (37) affectée à l'au moins une valeur instantanée déterminée.

6. Procédé selon l'une des revendications 3 à 5, présentant en outre les étapes de procédé suivantes :
- uniquement pour le secteur angulaire déterminé (P3), détermination des valeurs les plus élevées des valeurs instantanées (51, 52, 53) pour au moins deux des courants de phase électriques (*i_{1,2,3}*) du moteur synchrone à courant triphasé (36), et
- sur la base des valeurs instantanées déterminées (51, 52, 53), détermination de la position angulaire du rotor (38) par rapport au stator (37) affectée à la position du piston (34).

7. Procédé selon l'une des revendications 1 à 6, présentant en outre la commande du moteur synchrone à courant triphasé (36) de sorte que celui-ci ralentit jusqu'à s'arrêter en moins de 3/4 de rotation du moteur synchrone à courant triphasé (36), au départ d'une position du piston (34) par rapport à la chambre de compression (31) affectée à la position angulaire du rotor (38) par rapport au stator (37) affectée à l'au moins une valeur instantanée (51, 52, 53) déterminée.

8. Procédé selon la revendication 7, présentant, avant le ralentissement du moteur synchrone à courant triphasé (36), la réduction de la vitesse de rotation du moteur synchrone à courant triphasé (36) à une vitesse de rotation minimale.

9. Procédé selon l'une des revendications 3 à 8, dans lequel l'actionnement électrique (40) est un actionnement électrique à régulation de vitesse de rotation avec une régulation à orientation de champ (43), présentant l'augmentation de l'intensité de courant électrique de consigne prescrite par la régulation à orientation de champ (34) pour le moteur synchrone à courant triphasé (36) d'une valeur prédéterminée hormis pour le secteur angulaire (P3) auquel la valeur instantanée déterminée (51) est affectée.

10. Appareil frigorifique ménager présentant un corps calorifugé (10) avec un contenant intérieur réfrigérable (2), qui délimite un espace intérieur réfrigérable (3) prévu pour le stockage de denrées alimentaires, un circuit d'agent frigorifique (20) prévu pour la réfrigération de l'espace intérieur réfrigérable (3) avec un agent réfrigérant et un compresseur (21), un dispositif de commande électronique (8) et un actionnement électrique régulé (40), lequel présente un moteur synchrone à courant triphasé (36) et un actionneur formé en particulier sous la forme d'un convertisseur (41) pour la commande du moteur synchrone à courant triphasé (36), dans lequel l'actionnement électrique régulé (40) présente un dispositif de mesure (42), au moyen duquel des courants de phase électriques (*i_{1,2,3}*) du moteur synchrone à courant triphasé (36) peuvent être mesurés et une vitesse de rotation effective du moteur synchrone à courant triphasé (36) peut être déterminée, le dispositif de mesure (42) traitant la vitesse de rotation effective déterminée et les courants de phase électriques mesurés (*i_{1,2,3}*) du moteur synchrone à courant triphasé (36), de sorte que la vitesse de rotation effective déterminée et les courants de phase électriques mesurés (*i_{1,2,3}*) du moteur synchrone à courant triphasé (36) sont traités par une régulation de l'actionnement électrique (40) sous forme appropriée, dans lequel le compresseur (21) présente une chambre de compression (31) avec une entrée (32) et avec une sortie (33), un piston (34) logé de façon mobile à l'intérieur de la chambre de compression (31), un vilebrequin (35) et le moteur synchrone à courant triphasé (36), dans lequel le moteur synchrone à courant triphasé (36) comprend un nombre de paires de bornes P supérieur à 1, un stator (37) et un rotor (38) logé en rotation par rapport au stator (37), couplé au piston (34) via le vilebrequin (35), de sorte que durant le fonctionnement du compresseur (21), le piston (34) est capable, au moyen du moteur synchrone à courant triphasé (36) de réduire un volume (39) inclus par la chambre de compression (31) et le piston (34) pour compresser l'agent réfrigérant, et le dispositif de commande électronique (8) est aménagé afin de commander l'actionnement électrique régulé (40) conformément au procédé selon l'une des revendications 1 à 9.
